(19) Europäisches Patentamt
European Patent Office
Office européen des brevets

(11) **EP 4 506 724 B1**

(12) **EUROPÄISCHE PATENTSCHRIFT**

(45) Veröffentlichungstag und Bekanntmachung des Hinweises auf die Patenterteilung:
**18.06.2025 Patentblatt 2025/25**

(21) Anmeldenummer: **24188979.9**

(22) Anmeldetag: **16.07.2024**

(51) Internationale Patentklassifikation (IPC):
*G01S 13/06* (2006.01)   *G01S 13/74* (2006.01)
*G01S 13/82* (2006.01)   *G01S 13/84* (2006.01)
*G01S 13/87* (2006.01)   *G01S 17/06* (2006.01)
*G01S 17/86* (2020.01)

(52) Gemeinsame Patentklassifikation (CPC):
**G01S 13/87; G01S 13/06; G01S 13/74; G01S 13/82; G01S 13/825; G01S 13/84; G01S 13/872; G01S 17/06; G01S 17/86**

(54) **POSITIONSSENSOR ZUM ORTSAUFGELÖSTEN ERFASSEN VON OBJEKTEN IN EINEM ÜBERWACHUNGSBEREICH**

POSITION SENSOR FOR SPATIALLY RESOLVED DETECTION OF OBJECTS IN A MONITORING AREA

CAPTEUR DE POSITION POUR LA DÉTECTION À RÉSOLUTION SPATIALE D'OBJETS DANS UNE ZONE DE SURVEILLANCE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **07.08.2023 DE 102023120865**

(43) Veröffentlichungstag der Anmeldung:
**12.02.2025 Patentblatt 2025/07**

(73) Patentinhaber: **SICK AG**
**79183 Waldkirch (DE)**

(72) Erfinder:
• **SCHWARZKOPF, Sebastian**
**22949 Ammersbek (DE)**
• **SOCK, Björn**
**21629 Neu Wulmstorf (DE)**

(74) Vertreter: **Manitz Finsterwald**
**Patent- und Rechtsanwaltspartnerschaft mbB**
**Martin-Greif-Strasse 1**
**80336 München (DE)**

(56) Entgegenhaltungen:
**EP-A1- 2 927 838**

• **ROBERT MIESEN ET AL: "Holographic localization of passive UHF RFID transponders", RFID (RFID), 2011 IEEE INTERNATIONAL CONFERENCE ON, IEEE, 12 April 2011 (2011-04-12), pages 32 - 37, XP031864525, ISBN: 978-1-4244-9607-5, DOI: 10.1109/ RFID.2011.5764633**
• **MIESEN ROBERT ET AL: "3600 Carrier Phase Measurement for UHF RFID Local Positioning", 2013 IEEE INTERNATIONAL CONFERENCE ON RFID-TECHNOLOGIES AND APPLICATIONS (RFID-TA), 1 January 2013 (2013-01-01), pages 1 - 6, XP093194037, DOI: 10.1109/RFID- TA.2013.6694499**

**Beschreibung**

Die vorliegende Erfindung betrifft einen Positionssensor zum ortsaufgelösten Erfassen von Objekten in einem Überwachungsbereich, welcher eine Messeinrichtung zum Ermitteln von jeweiligen Positionssignalen für erfasste Objekte, die sich im Überwachungsbereich befinden, und ein RFID-Lesegerät umfasst, welches zum Aussenden von RFID-Steuerbefehlen in den Überwachungsbereich durch Erzeugen von modulierten RFID-Sendesignalen und zum Empfangen von RFID-Antwortsignalen, die von einem an einem Objekt angeordneten RFID-Transponder in Reaktion auf empfangene RFID-Steuerbefehle erzeugt werden, eingerichtet ist.

In zunehmendem Maße werden in unterschiedlichen technischen Bereichen autonom oder teilautonom gesteuerte Fahrzeuge eingesetzt, wobei es sich sowohl um Landfahrzeuge als auch um Luft- oder Wasserfahrzeuge handeln kann. Der Betrieb kann beispielsweise in Form eines offenen Systems erfolgen, beispielsweise einem öffentlichen Verkehrsnetz des Straßenverkehrs oder des Luftverkehrs. Ein weiteres Anwendungsfeld sind geschlossene Systeme, wie beispielsweise Logistiksysteme, beispielsweise Lagerhallen oder Lagerflächen, bei denen oftmals eine Vielzahl von Flurförderfahrzeugen wie Gabelstapler oder Transportfahrzeuge zum Befördern, Einlagern und Auslagern von Waren eingesetzt werden. Insbesondere zur Steuerung und zur Vermeidung von Kollisionen ist eine Überwachung der Verkehrsbereiche erforderlich. In die Überwachung werden oftmals nicht nur Fahrzeuge oder sonstige bewegliche Gegenstände, sondern auch Personen einbezogen. Auch stationäre Objekte wie stillstehende Fahrzeuge oder Ladegüter müssen in die Überwachung einbezogen werden.

Hierfür ist es erforderlich, die Position von gegebenenfalls im Überwachungsbereich vorhandenen Objekten zu ermitteln. Dies kann mit Hilfe geeigneter Messeinrichtungen erfolgen, die auf der Grundlage unterschiedlicher physikalischer Prinzipien für ein erfasstes Objekt dessen Position im Überwachung ermitteln können. Im Kontext dieser Offenbarung werden daher mit dem Begriff "Objekt" alle denkbaren Gegenstände, Fahrzeuge, Personen, Tiere oder dergleichen bezeichnet, deren Positionen von einer Messeinrichtung erfasst werden können.

Beispielsweise kann ein Radargerät als Messeinrichtung zum Ermitteln von Positionssignalen eines erfassten Objekts verwendet werden. Hierbei werden Radiowellen in den Überwachungsbereich ausgesendet und von einem gegebenenfalls dort anwesenden Objekt reflektierte Wellen erfasst. Um eine Lokalisierung eines erfassten Objekts zu ermöglichen, sollte das ermittelte Positionssignal zumindest eine Abstandskoordinate ($r$ bzw. $z$) und bevorzugt auch wenigstens eine Raumwinkelkoordinate ($\varphi$ und/oder $\theta$) bzw. eine kartesische Koordinate ($x$ und/oder $y$) umfassen. Mit einem Primärradar ist zwar eine Lokalisierung eines erfassten Objekts, nicht jedoch eine Identifizierung möglich. Um diesen Nachteil zu auszugleichen, werden insbesondere in der Luftfahrt sogenannte Sekundärradare eingesetzt. Sogenannte kooperierende Ziele werden mit Transpondern ausgerüstet, die nach Empfang eines entsprechenden Sendesignals von dem Sekundärradargerät aktiv mit einem Antwortsignal antworten, welches beispielsweise eine Kennung umfassen kann. Derartige, für Sekundärradarsysteme geeignete Transponder sind jedoch sehr komplex und insbesondere auf eine eigene Stromversorgung angewiesen. Für eine zusätzliche Ortung von Objekten ohne Transponder ist zusätzlich ein Primärradar notwendig.

Eine weitere Möglichkeit zur Ortung von mit Transpondern ausgestatteten Zielen ist die sogenannte UWB-Lokalisierung. Hierfür werden Signale extrem großer Frequenzbereiche eingesetzt, wobei UWB für den englischen Begriff "Ultra-Wideband" steht. Eine Ortung von Zielen ohne Transponder ist jedoch auch mit dieser Technik nicht möglich.

Eine Möglichkeit zur kostengünstigen Identifizierung von Objekten ist durch die Verwendung von RFID-Systemen gegeben. Ein RFID-System (von engl. radio frequency identification) bezeichnet ein Sender-Empfänger-System zum automatischen und berührungslosen Identifizieren und Lokalisieren von Objekten mit Radiowellen. Ein RFID-System besteht aus einem RFID-Transponder, der sich am oder im zu identifizierenden Objekt befindet und einen kennzeichnenden Code enthält, sowie einem RFID-Lesegerät zum Auslesen dieser Kennung. Das RFID-Lesegerät sendet modulierte RFID-Sendesignale in den Überwachungsbereich aus. Wenn ein im Überwachungsbereich anwesender RFID-Transponder ein solches RFID-Sendesignal empfängt, sendet dieser ein RFID-Antwortsignal aus, das wiederum von dem RFID-Lesegerät empfangen werden kann. Dieses RFID-Antwortsignal umfasst die in dem RFID-Transponder gespeicherte Kennung und gegebenenfalls noch weitere Signale oder Informationen. Der RFID-Transponder enthält einen Mikrochip, dessen Energieversorgung bei passiven RFID-Transpondern oder RFID-Tags über die Hochfrequenzenergie erfolgt, die in dem von dem RFID-Lesegerät erzeugten hochfrequenten elektromagnetischen Wechselfeld enthalten ist und über eine Antenne des RFID-Transponders aufgenommen wird. Bei aktiven RFID-Transpondern ist eine separate, im RFID-Transponder oder extern angeordnete Stromversorgung vorgesehen. Der im RFID-Transponder aktivierte Mikrochip decodiert die von dem RFID-Lesegerät gesendeten RFID-Steuerbefehle und codiert und moduliert die RFID-Antwortsignale in das eingestrahlte elektromagnetische Feld durch Feldschwächung im kontaktfreien Kurzschluss oder durch gegenphasige Reflexion des von dem RFID-Lesegerät ausgesendeten Feldes. Der RFID-Transponder erzeugt in der Regel also selbst kein Feld, sondern beeinflusst das elektromagnetische Sendefeld des RFID-Lesegeräts.

Aus WO 2020/053650 A1 ist ein Verfahren zur Verbesserung eines Fahrzeugnavigationssystems bekannt, bei dem ein oder mehrere RFID-Transponder an einem jeweiligen zu erfassenden Objekt, beispielsweise an einem Verkehrsteilnehmer oder einem Fahrzeug, angeordnet wird. Der RFID-Transponder kann neben seiner Kennung oder Identifikation weitere Informationen, beispielsweise über seine Position, seine Geschwindigkeit oder seine Bewegungsrichtung übermitteln. Zur Positionsbestimmung ist es jedoch nötig, dass an dem Objekt zusätzlich zu dem RFID-Transponder ein entsprechendes System, beispielsweise ein GPS-Empfänger angeordnet ist. Hierdurch erhöht sich jedoch wiederum die Komplexität des Systems und damit auch die Kosten. Zudem ist eine Energieversorgung notwendig.

Die DE 10 2020 206 882 A1 offenbart eine Kombination eines Radar- oder Lidarsystems und eines RFID-Systems. Eine jeweilige Verknüpfung von Positionssignalen für Objekte, die von der Messeinrichtung, also hier einem Radar (von engl. radio detection and ranging) oder Lidar (von engl. light detection and ranging), ermittelt wurden, mit einem spezifischen RFID-Transponder ist nicht möglich. Bei einer Ausgestaltung wird die Anzahl der mittels Radar und/oder Lidar ermittelten Objekte mit der Anzahl der mittels RFID detektierten Objekte verglichen, wobei bei fehlender Übereinstimmung eine Notbremsung oder dergleichen durchgeführt wird. Es kann also nur festgestellt werden, ob im Lesebereich des RFID-Lesegeräts alle mit RFID-Transpondern markierten Objekte auch mittels des Umgebungssensors erfasst wurden. Gemäß einer weiteren Ausgestaltung wird die Verwendung eines RFID-Lesegeräts beschrieben, welches zusätzlich Richtungsdaten bereitstellen kann.

Die EP 2 927 838 A1 offenbart eine Vorrichtung zum Identifizieren und Lokalisieren von Objekten, welche einen Laserscanner und einen RFID-Leser umfasst. Eine Steuer- und Auswertungseinheit der Vorrichtung erhält von dem RFID-Leser neben einer RFID-Kennung auch ein Kennzeichen des RFID-Signals, welches unter anderem dessen Phase oder Laufzeit umfasst, sowie von dem Laserscanner erfasste Objektpositionen. Diese Eingangsdaten werden in einer Lokalisierungseinrichtung dazu verwendet, um Transponderpositionen zu bestimmen. Die Objektpositionen und die Transponderpositionen werden in einer Zuordnungseinrichtung genutzt, um Objekte und Transponder einander nach vorgeschriebenen Optimierungskriterien zuzuordnen.

In der Publikation Miesen, R., Kirsch, F., Vossiek, M.: "Holographie Localization of Passive UHF RFID Transponders." International Conference on RFID, 2011. S. 32-37. - ISBN 978-1-4244-9606-8 wird eine Methode zur holografischen Lokalisierung von passiven UHF-RFID-Transpondern vorgestellt. Es wird gezeigt, wie Personen oder Geräte, die mit einem RFID-Lesegerät ausgestattet sind und die sich entlang einer Trajektorie bewegen, in die Lage versetzt werden können, getaggte Objekte zuverlässig zu lokalisieren. Die Lokalisierungsmethode basiert auf Phasenwerten, die von einem RFID-Lesegerät aus einer synthetischen Apertur abgetastet werden. Das berechnete holografische Bild ist eine räumliche Wahrscheinlichkeitsdichtefunktion, die die tatsächliche Position des RFID-Tags erkennen lässt.

Es ist die Aufgabe der vorliegenden Erfindung, einen Positionssensor zu schaffen, welcher auf kostengünstige Weise eine Positionsbestimmung und Identifizierung von erfassten Objekten ermöglicht.

Die Lösung der Aufgabe erfolgt durch einen Positionssensor mit den Merkmalen des Anspruchs 1. Vorteilhafte Ausführungsformen des Positionssensors sind in den abhängigen Ansprüchen angegeben.

Ein erfindungsgemäßer Positionssensor zum ortsaufgelösten Erfassen von Objekten in einem Überwachungsbereich umfasst eine Messeinrichtung zum Ermitteln von jeweiligen Positionssignalen für erfasste Objekte, die sich im Überwachungsbereich befinden, ein benachbart zu der Messeinrichtung angeordnetes RFID-Lesegerät, welches zum Aussenden von RFID-Steuerbefehlen in den Überwachungsbereich durch Erzeugen von modulierten RFID-Sendesignalen und zum Empfangen von RFID-Antwortsignalen, die von einem an einem Objekt angeordneten RFID-Transponder in Reaktion auf empfangene RFID-Steuerbefehle erzeugt werden, und zum Ermitteln einer Phasenverschiebung zwischen den RFID-Sendesignalen und den RFID-Antwortsignalen eingerichtet ist, und eine Auswerteeinheit, welche mit der Messeinrichtung und dem RFID-Lesegerät verbunden ist und dazu eingerichtet ist, einem jeweiligen von der Messeinrichtung ermittelten Positionssignal zumindest ein jeweiliges, zeitlich korrespondierendes RFID-Antwortsignal unter Berücksichtigung der ermittelten Phasenverschiebung dieses RFID-Antwortsignals zuzuordnen.

In diesem Zusammenhang umfasst das Zuordnen eines RFID-Antwortsignals zu einem Positionssignal insbesondere auch ein Feststellen, dass das Positionssignal und ein RFID-Antwortsignal demselben Objekt zuzuordnen sind. Das von der Messeinrichtung ermittelte Positionssignal umfasst zumindest eine Abstandskoordinate und bevorzugt auch wenigstens eine Raumwinkelkoordinate bzw. zumindest eine weitere kartesische Koordinate.

Die Erfindung basiert auf der Erkenntnis der Erfinder, dass bei einem RFID-System eine ermittelte Phasenverschiebung zwischen den RFID-Sendesignalen und den RFID-Antwortsignalen dazu verwendet werden kann, den beispielsweise mittels Radar ermittelten Positionssignalen durch die Berücksichtigung dieser Phasenlage zeitlich korrespondierende RFID-Antwortsignale eindeutig zuzuordnen, auch wenn die Raumwinkellage des entsprechenden RFID-Transponders nicht bekannt ist. Die genannte zeitliche Korrespondenz zwischen einem von der Messeinrichtung ermittelten Positionssignal und einem RFID-Antwortsignal ist so zu verstehen, dass das Positionssignal und das RFID-Antwortsignal zum gleichen Zeitpunkt oder zumindest innerhalb einer definierten kurzen Zeitspanne erfasst werden. Damit wird sichergestellt, dass sowohl das für ein jeweiliges Objekt erzeugte Positionssignal als auch das von diesem Objekt stammende RFID-Antwortsignal annähernd an derselben Position erzeugt werden, um zu gewährleisten, dass eine ggf. stattfindende Bewegung des Objekts in der Zeitspanne zwischen der Erzeugung der beiden Signale das Erfassungsergebnis möglichst nicht beeinträchtigt. Dementsprechend wird die genannte kurze Zeitspanne bevorzugt an eine erwartete maximale Bewegungsgeschwindigkeit der zu erfassenden Objekte angepasst.

Mit der vorliegenden Erfindung kann insbesondere auch ein Nachteil von gebräuchlichen Messeinrichtungen wie beispielsweise Radargeräten kompensiert werden, der in einer begrenzten Auflösung bei der Ermittlung der Abstandskoordinate besteht. Dadurch kann es vorkommen, dass beispielsweise zwei Objekte, die sich in Blickrichtung des Radargeräts gesehen gegenseitig teilweise verdecken und nur einen geringen radialen Abstand voneinander aufweisen, unter Umständen nicht voneinander getrennt werden, so dass für beide Objekte nur ein einziges Objekterfassungssignal erzeugt wird. Da bei dem erfindungsgemäßen Positionssensor für beide Objekte hingegen zusätzlich jeweilige RFID-Antwortsignale vorliegen, für die aufgrund der ermittelten Phasenlage dieser Signale auch Abstandsinformationen bekannt sind, kann das von der Messeinrichtung ermittelte gemeinsame Positionssignal sowohl dem vorderen als auch dem hinteren Objekt zugeordnet werden, wobei die zunächst ungenau ermittelte Abstandskoordinate auf Basis der Phasenverschiebungen für jedes Objekt präzisiert werden kann. Hierdurch wird die Erfassungsgenauigkeit des Positionssensors wesentlich verbessert.

Gemäß einer bevorzugten Ausführungsform umfasst die Messeinrichtung ein Radargerät, ein Lidargerät und/oder eine abstandsmessende Kamera. Bei Radar- und Lidargeräten erfolgt das Ermitteln der Position eines erfassten Objekts in bekannter Weise durch Aussenden von elektromagnetischen Wellen, d.h. von Radarwellen bzw. Lichtwellen, in den Überwachungsbereich, Empfangen von Wellen, die von dem Objekt passiv remittiert wurden, und Ermitteln einer Position des Objekts auf der Grundlage der empfangenen Wellen. Gemäß dieser Definition wird kann unter einem Lidargerät in synonymer Weise auch eine 2D- oder 3D-Scanvorrichtung subsummiert werden. Bei einer abstandsmessenden Kamera erfolgt die Abstandsmessung in bekannter Weise durch Stereoskopie oder durch Verwendung eines sogenannten TOF-Bildsensors (von Englisch Time Of Flight), bei dem die Lichtlaufzeit von Lichtsignalen ermittelt werden, die von einer Beleuchtungseinheit in den Überwachungsbereich emittiert und von dem zu erfassenden Objekt in Richtung des TOF-Bildsensors remittiert werden. Grundsätzlich kann die Messeinrichtung auch eine Kombination von verschiedenen abstandsmessenden Messeinrichtungen gebildet sein.

Gemäß einer weiteren bevorzugten Ausführungsform ist die Auswerteeinheit dazu eingerichtet, ein Objekterfassungssignal für ein jeweiliges Objekt zu erzeugen, wobei in dem Objekterfassungssignal ein für dieses Objekt ermitteltes Positionssignal und ein Identifizierungscode enthalten sind, welcher gegebenenfalls in dem zugeordneten RFID-Antwortsignal codiert ist. Das Objektsignal kann an eine übergeordnete Steuereinheit übermittelt werden, die beispielsweise auf der Grundlage der Objekterfassungssignale Navigationssignale an die erfassten Objekte oder andere Einrichtungen eines übergeordneten Systems übermittelt. Somit ist der Positionssensor zusätzlich zum Identifizieren eines erfassten Objekts auf der Grundlage eines gegebenenfalls in einem RFID-Antwortsignal codierten Identifizierungscodes eingerichtet.

Gemäß einer weiteren bevorzugten Ausführungsform ist die Auswerteeinrichtung dazu eingerichtet, die Phasenverschiebung zwischen den RFID-Sendesignalen und den RFID-Antwortsignalen durch ein Demodulationsverfahren, insbesondere ein I&Q-Demodulationsverfahren zu ermitteln. Der Begriff "I&Q-Demodulationsverfahren" leitet sich von dem englischen Begriff "In-Phase and Quadrature" ab. Hierbei wird das Empfangssignal in zwei Wege aufgeteilt, wobei der eine Weg der Demodulation mit der originalen Phasenlage (Englisch: "In-Phase") durchgeführt wird und die sogenannten I-Daten ergibt und der andere Weg mit einer um 90° phasenverschobenen Referenzfrequenz des RFID-Sendesignals durchgeführt wird und die Q-Daten ergibt. Die Größe der Einzelkomponenten I und Q können mit einer Winkelfunktion berechnet werden, wobei gilt:

$$I = A \cdot \cos \Phi$$

$$Q = A \cdot \sin \Phi$$

Auf der Grundlage dieser Gleichung kann eine Rückrechnung des Phasenwinkels $\Phi$ vorgenommen werden, wobei gilt:

$$\Phi = \arctan \frac{Q}{I}.$$

Eine Beschreibung der Trägerphasenmessung bei RFID-Systemen und anderen drahtlosen Kommunikationssystemen ist in der Publikation R. Miesen, A. Parr, J. Schleu and M. Vossiek, "360° carrier phase measurement for UHF RFID local positioning," 2013 IEEE International Conference on RFID-Technologies and Applications (RFID-TA), Johor Bahru, Malaysia, 2013, pp. 1-6, DOI: 10.1109/RFID-TA.2013.6694499 offenbart.

Erfindungsgemäß ist die Auswerteeinheit dazu eingerichtet, mittels eines Optimierungsverfahrens ausgehend von einem Abstandswert, welcher einer Abstandskomponente des von der Messeinrichtung ermittelten Positionssignals entspricht, unter Berücksichtigung der Wellenlänge und der jeweiligen Phasenverschiebung eines oder mehrerer RFID-Antwortsignale für jeweilige Divisionen des Abstandswerts durch unterschiedliche ganzzahlige Vielfache der Wellenlänge λ einen zugehörigen Divisionsrest zu ermitteln, und diesem Positionssignal ein jeweiliges RFID-Antwortsignal zuzuordnen, wenn für eine der jeweiligen Divisionen der Differenzbetrag zwischen der Phasenverschiebung dieses RFID-Antwortsignal und dem Divisionsrest dieser Division minimal ist.

Im Rahmen dieses Optimierungsverfahrens wird beispielsweise der Abstandswert, der beispielsweise mittels Radar ermittelt wurde, durch λ, 2λ, 3λ usw. dividiert und für jede dieser Divisionen der Differenzbetrag zwischen der zuvor ermittelten Phasenverschiebung des zu betrachtenden RFID-Antwortsignals und dem jeweiligen Divisionsrest ermittelt. Wenn für eine dieser Divisionen das Kriterium "Differenzbetrag minimal" erfüllt ist, wird dem Positionssignal, dessen Abstandswert untersucht wurde, das entsprechende RFID-Antwortsignal zugeordnet. Das genannte Kriterium, wonach der Differenzbetrag minimal sein soll, ist so zu verstehen, dass der Referenzbetrag gleich Null oder kleiner als ein vorgegebener Schwellenwert sein muss, um das genannte Kriterium zu erfüllen. Grundsätzlich können für jedes Positionssignal auch mehrere RFID-Antwortsignale auf Übereinstimmung ihrer jeweiligen Phasenlage mit dem Abstandswert überprüft werden. Auf diese Weise können - wie vorstehend bereits beispielhaft erwähnt wurde -einem beispielsweise per Radar ermittelten Positionssignal unter Umständen zwei oder mehr RFID-Antwortsignale zugeordnet werden. Dadurch können mit Hilfe der RFID-Phasenlage auch solche Objekte voneinander getrennt werden, deren Abstand kleiner ist als das Auflösungsvermögen der Messeinrichtung.

In dem Zusammenhang hat es sich als vorteilhaft erwiesen, wenn das Ermitteln von Positionssignalen, das Ermitteln von Phasenverschiebungen von RFID-Antwortsignalen und das Ermitteln des Divisionsrests zyklisch erfolgen, wobei die Auswerteeinheit dazu eingerichtet ist, einem Positionssignal, das während einer vorgegebenen Anzahl von Zyklen nicht oder innerhalb eines vorgegebenen Positionsbereichs variiert, das in entsprechender Weise variierende RFID-Antwortsignal nur dann zuzuordnen, wenn der jeweiligen Differenzbetrag während der vorgegebenen Anzahl von Zyklen minimal ist. Mit anderen Worten wird ein bewegtes oder auch stationäres Objekt über mehrere Zyklen beobachtet, wobei die Zuordnung nur dann erfolgt, wenn in jedem oder zumindest in einer Mehrzahl dieser Zyklen das Zuordnungskriterium erfüllt ist.

Gemäß einer weiteren bevorzugten Ausführungsform weist das RFID-Lesegerät einen Sendeschaltkreis zum Erzeugen und Aussenden der RFID-Sendesignale und einen Empfangsschaltkreis zum Empfangen der RFID-Antwortsignale auf, wobei der Sendeschaltkreis und der Empfangsschaltkreis derart ausgestaltet sind, dass zusätzlich zu den empfangenen RFID-Antwortsignalen zumindest ein Teil der RFID-Sendesignale unmittelbar von dem Empfangsschaltkreis als RFID-Lecksignale empfangen werden, und wobei die Auswerteinheit dazu eingerichtet ist, die Phasenverschiebung zwischen den von dem Empfangsschaltkreis empfangenen RFID-Lecksignalen und den RFID-Antwortsignalen eingerichtet ist. Das unmittelbare Empfangen der Lecksignale von dem Empfangsschaltkreis bedeutet, dass dies durch ein Übersprechen und insbesondere ohne eine Beeinflussung durch den RFID-Transponder erfolgt. Der Sendeschaltkreis und der Empfangsschaltkreis weisen zumindest eine jeweilige Antenne auf, wobei die von der Sendeantenne abgestrahlten RFID-Lecksignale direkt von der Empfangsantenne erfasst werden. Sofern mehrere Sendeantennen bzw. Empfangsantennen vorgesehen sind, können zusätzlich zu der Phasenlage auch Abstandsinformationen für die RFID-Empfangssignale ermittelt werden. Diese zusätzlichen Abstandsinformationen können ebenfalls bei der Zuordnung von RFID-Antwortsignalen zu den Positionssignalen berücksichtigt werden.

Weitere Vorteile des erfindungsgemäßen Positionssensors und vorteilhafte Ausgestaltungen ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird diese Merkmale zweckmäßigerweise auch einzeln betrachten und zu sinnvollen weiteren Kombinationen zusammenfassen.

Es zeigen:

Fig. 1 eine schematische Darstellung eines Positionssensors gemäß einem Ausführungsbeispiel, und

Fig. 2 ein Diagramm, welches eine ermittelte Phasenverschiebung zwischen RFID-Sendesignalen und RFID-Antwortsignalen veranschaulicht.

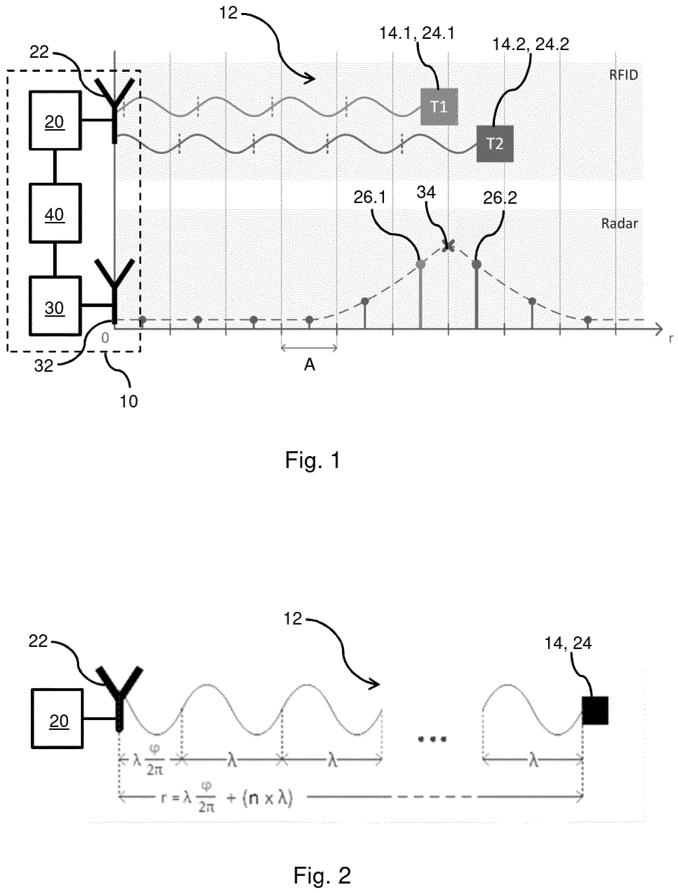

Fig. 1 zeigt einen Positionssensor 10 gemäß einem Ausführungsbeispiel, welcher zum ortsaufgelösten Erfassen von Objekten in einem Überwachungsbereich 12 eingerichtet ist. In Fig. 1 sind beispielhaft zwei Objekte 14.1, 14.2 in unterschiedlichem Abstand zum Positionssensor 10 dargestellt. Der Positionssensor 10 umfasst eine Messeinrichtung 30 zum Ermitteln von jeweiligen Positionssignalen für erfasste Objekte 14.1, 14.2, die sich im Überwachungsbereich 12 befinden. Die Messeinrichtung ist im Ausführungsbeispiel als Radargerät 30 ausgebildet und kann eine schwenkbare Sende- und Empfangsantenne zum Abtasten des Überwachungsbereichs 12 oder neben einer Sendeantenne ein Array von Empfangsantennen zum ortsausgelösten Empfangen der an einem Objekt 14.1, 14.2 reflektierten Sendesignale umfassen. In Fig. 1 sind die Sende- bzw. Empfangsantennen durch eine einzige Antenne 32 symbolisiert.

Gemäß Abwandlungen kann die Messeinrichtung auch als Lidargerät oder als abstandsmessende Kamera ausgebildet sein, bei welcher die Abstandsmessung mittels Stereoskopie oder durch Verwendung eines lichtlaufzeitmessenden TOF-Sensors erfolgt.

Der Positionssensor 10 umfasst weiterhin ein benachbart zu dem Radargerät 30 angeordnetes RFID-Lesegerät 20, welches zum Aussenden von RFID-Steuerbefehlen in den Überwachungsbereich durch Erzeugen von modulierten RFID-Sendesignalen und zum Empfangen von RFID-Antwortsignalen eingerichtet ist. Das RFID-Lesegerät 20 wird vorteilhafterweise mit nur geringem lateralen Abstand zum Radargerät 30 angeordnet, um etwaige Parallaxenfehler zu minimieren.

An den Objekten 14.1, 14.2 sind jeweilige RFID-Transponder 24.1, 24.2 angeordnet oder in diese integriert. Die RFID-Transponder 24.1, 24.2 können als aktive oder passive RFID-Transponder ausgebildet sein. Ein RFID-Transponder 24.1, 24.2 reagiert auf einen empfangenen RFID-Steuerbefehl mit dem Aussenden eines RFID-Antwortsignals, welches neben einer Kennung oder einem Identifizierungscode, welcher eine eindeutige Identifizierung des jeweiligen RFID-Transponders 24.1, 24.2 ermöglicht, noch weitere Informationen enthalten kann. Das Aussenden der RFID-Antwortsignale erfolgt in bekannter Weise durch Modulation des eingestrahlten elektromagnetischen Sendefelds des RFID-Lesegeräts 20, wobei sowohl eine Feldschwächung als auch eine gegenphasige Reflexion des vom RFID-Lesegerät 20 ausgesendeten Feldes erfolgen kann. Das RFID-Lesegerät 20 ist zum Erzeugen der modulierten RFID-Sendesignale und zum Empfangen der RFID-Antwortsignale mit jeweiligen Antennen und/oder Antennenarrays verbunden, welche in Fig. 1 symbolisch durch die Antenne 22 repräsentiert sind.

Zwischen den RFID-Sendesignalen und den RFID-Antwortsignalen besteht eine feste Phasenbeziehung, die von einem Abstand r des jeweiligen Objekts 14.1, 14.2 bzw. des an diesem Objekt 14.1, 14.2 angeordneten RFID-Transponders 24.1, 24.2 von dem Positionssensor 10 bzw. des RFID-Lesegeräts 20 abhängt.

Eine Phasenverschiebung $\varphi$ zwischen den RFID-Sendesignalen und den RFID-Antwortsignalen kann beispielsweise durch ein Demodulationsverfahren, insbesondere durch ein I&Q-Demodulationsverfahren ermittelt werden.

Im unteren Teil von Fig. 1 sind symbolisch verschiedene Signale als Punkte eingezeichnet, wobei deren Position auf der r-Achse vom Objektabstand abhängig ist. Das Radargerät 30 weist eine begrenzte Abstandsauflösung A auf, welche in Fig. 1 durch einen entsprechenden Doppelpfeil symbolisiert ist. Nahe beieinander oder hintereinanderliegende Objekte, wie die Objekte 14.1, 14.2 in Fig. 1, können von dem Radargerät 30 nicht mehr aufgelöst werden. Dadurch werden für die Objekte 14.1, 14.2 keine separaten Positionssignale erzeugt, sondern ein gemeinsames Positionssignal 34.

Mit dem erfindungsgemäßen Positionssender 10 ist es auf der Grundlage der von den RFID-Transpondern 24.1, 24.2 übermittelten RFID-Antwortsignale möglich, die beiden Objekte 14.1, 14.2 getrennt voneinander zu erfassen und zu identifizieren, was alleine mit dem Radargerät 30 nicht möglich wäre.

Dies kann mittels einer Auswerteeinheit 40 des Positionssensors 10 erfolgen, welche mit dem RFID-Lesegerät 20 und mit dem Radargerät 30 verbunden ist. Das RFID-Lesegerät 20, das Radargerät 30 und die Auswerteeinheit 40 können einschließlich der Antennen 22, 32 in einem gemeinsamen Gehäuse integriert sein, was durch den gestrichelten Kasten in Fig. 1 symbolisiert ist. Die Auswerteeinheit 40 ist dazu eingerichtet, unter Berücksichtigung des von dem Radargerät 30 ermittelten Positionssignals 34 und den ermittelten Phasenverschiebungen der von den RFID-Transpondern 24.1, 24.2 erzeugten RFID-Antwortsignale entsprechende bezüglich des Abstands präzisierte oder korrigierte Positionssignale 26.1, 26.2 (im unteren Teil von Fig. 1 dargestellt) zu ermitteln.

In Abhängigkeit von der gewählten Wellenlänge der RFID-Sendesignale ist es alleine auf der Grundlage der Phasenverschiebung nur eingeschränkt möglich, den Abstand eines Objekts 14.1, 14.2 von dem Positionssensor 10 (bzw. dessen RFID-Lesegerät 20) zu ermitteln, da der Eindeutigkeitsbereich auf maximal eine Wellenlänge beschränkt ist. Durch Berücksichtigung des mittels des Radargeräts 30 ermittelten Positionssignals 34 ist es jedoch möglich, den zugehörigen Abstand eines RFID-Antwortsignals abzuschätzen und diesen einem bestimmten Objekt 14.1, 14.2 in Form eines korrigierten Positionssignals 26.1, 26.2 zuzuordnen.

Dieser Zusammenhang wird nachfolgend mit Bezug auf Fig. 2 näher erläutert. In Fig. 2 sind für ein RFID-Lesegerät 20 und ein einziges Objekt 14 mit einem daran angeordneten oder darin integrierten RFID-Transponder 24 verschiedene Wellenzüge symbolisch dargestellt. In Abhängigkeit von dem Abstand r des Objekts 14 von dem RFID-Lesegerät 20 weist ein RFID-Antwortsignal gegenüber dem zeitlich korrespondierenden RFID-Sendesignal eine bestimmte Laufzeitverzögerung auf, wobei dieser Laufzeitverzögerung entsprechend des Abstands r eine bestimmte Anzahl n von vollständigen Perioden sowie ein Bruchteil einer Periode unter Berücksichtigung der Ausbreitungsgeschwindigkeit der Radarwellen zugeordnet werden können. Der Bruchteil einer Periode ergibt sich aus der ermittelten Phasenverschiebung $\varphi$ gemäß $\lambda \cdot \dfrac{\varphi}{2\pi}$. Für den Abstand r gilt somit die Beziehung:

$$r = \lambda \cdot \frac{\varphi}{2\pi} + (n \cdot \lambda).$$

Mittels eines Optimierungsverfahrens können nun für den Abstandswert r, welcher der Abstandskomponente des von dem Radargerät 30 ermittelten Positionssignals 34 entspricht, unter Berücksichtigung der Wellenlänge $\lambda$ und der ermittelten Phasenverschiebung $\varphi$ der den korrigierten Positionssignalen 26.1, 26.2 zugrunde liegenden RFID-Antwortsignale für jeweilige Divisionen des Abstandswerts $r$ durch unterschiedliche ganzzahlige Vielfache der Wellenlänge $\lambda$ zugehörige Divisionsreste ermittelt werden. Dem von dem Radargerät 30 ermittelten Positionssignal 34 kann ein jeweiliges RFID-Antwortsignal zugeordnet werden, wenn für eine jeweilige Division der Differenzbetrag zwischen der Phasenverschiebung dieses RFID-Antwortsignals und dem Divisionsrest dieser Division minimal ist.

Mit anderen Worten kann der Abstandswert r im Rahmen des Optimierungsverfahrens beispielsweise durch $\lambda$, 2$\lambda$, 3$\lambda$ ... dividiert werden und der Differenzbetrag zwischen der Phasenverschiebung $\varphi$ des zu betrachtenden RFID-Antwortsignals und dem jeweiligen Divisionsrest für jede dieser Divisionen ermittelt werden. Wenn für eine dieser Division der Differenzbetrag minimal wird, wird dem Positionssignal 34, dessen Abstandswert $r$ untersucht wurde, das betreffende RFID-Antwortsignal zugeordnet. Dieses Optimierungsverfahren lässt sich mathematisch durch die Funktion

$$\min\left(\lambda\frac{\varphi}{2\pi} - modulo(r, n_i \cdot \lambda)\right)$$

ausdrücken, wobei der Operator $n_i$ die Variation über die ganzzahligen Vielfachen von $\lambda$ repräsentiert.

Bezogen auf das schematische Ausführungsbeispiel von Fig. 1 bedeutet dies, dass für beide Objekte 14.1, 14.2 der genannte Divisionsrest für die dort dargestellte Periodenanzahl n = 4 minimal wird.

Es versteht sich, dass die betrachteten Positionssignale und RFID-Antwortsignale zeitlich korrespondieren müssen, d.h. vorzugsweise zum selben Zeitpunkt oder mit einer sehr geringen Zeitdifferenz erzeugt bzw. erfasst werden sollten, damit zwischenzeitliche Bewegungen eines Objekts das Zuordnungsergebnis nicht verfälschen.

Vorteilhafterweise werden daher sowohl die Positionssignale als auch die RFID-Antwortsignale über mehrere Messzyklen hinweg ermittelt und eine entsprechende Zuordnung nur dann vorgenommen, wenn über die mehreren Messzyklen keine oder nur eine geringe Abweichung der ermittelten Abstandswerte festgestellt wurde.

Ein Vorteil des erfindungsgemäßen Positionssensors 10 ist dadurch gegeben, dass im Vergleich zu einem ausschließlich auf RFID-Technik basierenden Positionserkennungssystem dort oftmals auftretende funktechnisch bedingte Überreichweiten mit Hilfe der durch die Messeinrichtung 30, insbesondere mittels Radarmessung, durchgeführten Positionsbestimmung einfach und robust erkannt und unterdrückt werden können.

Ein bevorzugtes Anwendungsgebiet des erfindungsgemäßen Positionssensors 10 findet sich beispielsweise in abgeschlossenen Bereichen, bei dem zumindest ein Teil der dort vorhandenen, potentiell gefährlichen Objekte mit RFID-Transpondern ausgestattet wird und somit eine Identifizierung und auch eine Nachverfolgung möglich ist. Durch die Kombination einer Abstandsmessung mittels Radar, Lidar oder Kamera mit der Bestimmung der Phasenverschiebung von RFID-Antwortsignalen können Auflösungsprobleme in komplexen Szenarien behoben werden. Als ein weiterer Vorteil gegenüber ausschließlich RFID-basierten Systemen kann aufgrund der Unterdrückung von Überreichweiten die Einrichtung eines Überwachungssystems vereinfacht werden.

Bezugszeichenliste

| | |
|---|---|
| 10 | Positionssensor |
| 12 | Überwachungsbereich |
| 14, 14.1, 14.2 | Objekt |
| 20 | RFID-Lesegerät |
| 22 | Antenne des RFID-Lesegeräts |
| 24, 24.1, 24.2 | RFID-Transponder |
| 26.1, 26.2 | korrigiertes Positionssignal |
| 30 | Messeinrichtung, Radargerät |
| 32 | Antenne des Radargeräts |
| 34 | Positionssignal |
| 40 | Auswerteeinheit |
| A | Auflösung des Radargeräts |
| r | Abstand |

**Patentansprüche**

1. Positionssensor (10) zum ortsaufgelösten Erfassen von Objekten (14, 14.1, 14.2) in einem Überwachungsbereich (12),

mit einer Messeinrichtung (30) zum Ermitteln von jeweiligen Positionssignalen für erfasste Objekte (14, 14.1, 14.2), die sich im Überwachungsbereich (12) befinden, mit einem benachbart zu der Messeinrichtung (30) angeordneten RFID-Lesegerät (20), welches zum Aussenden von RFID-Steuerbefehlen in den Überwachungsbereich (12) durch Erzeugen von modulierten RFID-Sendesignalen und zum Empfangen von RFID-Antwortsignalen, die von einem an einem Objekt (14, 14.1, 14.2) angeordneten RFID-Transponder (24, 24.1, 24.2) in Reaktion auf empfangene RFID-Steuerbefehle erzeugt werden, und zum Ermitteln einer Phasenverschiebung zwischen den RFID-Sendesignalen und den RFID-Antwortsignalen eingerichtet ist, und mit einer Auswerteinheit (40), welche mit der Messeinrichtung (30) und dem RFID-Lesegerät (20) verbunden ist und dazu eingerichtet ist, einem jeweiligen von der Messeinrichtung (30) ermittelten Positionssignal zumindest ein jeweiliges, zeitlich korrespondierendes RFID-Antwortsignal unter Berücksichtigung der ermittelten Phasenverschiebung dieses RFID-Antwortsignals zuzuordnen, **dadurch gekennzeichnet, dass**

die die Auswerteeinheit (40) dazu eingerichtet ist, mittels eines Optimierungsverfahrens ausgehend von einem Abstandswert, welcher einer Abstandskomponente des von der Messeinrichtung (30) ermittelten Positionssignals entspricht, unter Berücksichtigung der Wellenlänge und der jeweiligen Phasenverschiebung eines oder mehrerer RFID-Antwortsignale für jeweilige Divisionen des Abstandswerts durch unterschiedliche ganzzahlige Vielfache der Wellenlänge einen zugehörigen Divisionsrest zu ermitteln, und diesem Positionssignal ein jeweiliges RFID-Antwortsignal zuzuordnen, wenn für eine der jeweiligen Divisionen der Differenzbetrag zwischen der Phasenverschiebung dieses RFID-Antwortsignals und dem Divisionsrest dieser Division minimal ist.

2. Positionssensor (10) nach Anspruch 1, **dadurch gekennzeichnet,** **dass** die Messeinrichtung (30) ein Radargerät (30), ein Lidargerät und/oder eine abstandsmessende Kamera umfasst.

3. Positionssensor (10) nach Anspruch 1 oder 2, **dadurch gekennzeichnet,** **dass** die Auswerteinheit (40) dazu eingerichtet ist, ein Objekterfassungssignal für ein jeweiliges Objekt (14, 14.1, 14.2) zu erzeugen, wobei in dem Objekterfassungssignal ein für dieses Objekt (14, 14.1, 14.2) ermitteltes Positionssignal und ein Identifizierungscode enthalten sind, welcher in dem zugeordneten RFID-Antwortsignal codiert ist.

4. Positionssensor (10) nach einem der vorhergehenden Ansprüche, **dadurch gekennzeichnet,** **dass** die Auswerteeinheit (40) dazu eingerichtet ist, die Phasenverschiebung zwischen den RFID-Sendesignalen und den RFID-Antwortsignalen durch ein Demodulationsverfahren, insbesondere ein I&Q-Demodulationsverfahren zu ermitteln.

5. Positionssensor (10) nach einem der vorhergehenden Ansprüche, **dadurch gekennzeichnet,** **dass** das Ermitteln von Positionssignalen, das Ermitteln von Phasenverschiebungen von RFID-Antwortsignalen und das Ermitteln des Divisionsrests zyklisch erfolgt, wobei die Auswerteeinheit (40) dazu eingerichtet ist, einem Positionssignal, das während einer vorgegebenen Anzahl von Zyklen nicht oder nur innerhalb eines vorgegebenen Positionsbereichs variiert, das in entsprechender Weise variierende RFID-Antwortsignal nur dann zuzuordnen, wenn der jeweilige Differenzbetrag während der vorgegebenen Anzahl von Zyklen minimal ist.

## Claims

1. A position sensor (10) for the spatially resolved detection of objects (14, 14.1, 14.2) in a monitored zone (12),

said position sensor (10) comprising a measurement device (30) for determining respective position signals for detected objects (14, 14.1, 14.2) which are located in the monitored zone (12),

an RFID reading device (20) which is arranged adjacent to the measurement device (30) and which is configured to transmit RFID control commands into the monitored zone (12) by generating modulated RFID transmission signals and to receive RFID response signals, which are generated by an RFID transponder (24, 24.1, 24.2) arranged at an object (14, 14.1, 14.2) in response to received RFID control commands, and to determine a phase shift between the RFID transmission signals and the RFID response signals,

and an evaluation unit (40) which is connected to the measurement device (30) and the RFID reading device (20) and which is configured to assign at least one respective, temporally corresponding RFID response signal to a respective position signal determined by the measurement device (30), considering the determined phase shift of this RFID response signal, **characterized in that**

the evaluation unit (40) is configured to determine, by means of an optimization method, starting from a distance value which corresponds to a distance component of the position signal determined by the measurement device (30), considering the wavelength and the respective phase shift of one or more RFID response signals, an associated division remainder for respective divisions of the distance value by different integer multiples of the wavelength and to assign a respective RFID response signal to this position signal if the difference amount between the phase shift of this RFID response signal and the division remainder of this division is minimal for one of the respective divisions.

2. A position sensor (10) according to claim 1,

**characterized in that**
the measurement device (30) comprises a radar device (30), a lidar device and/or a distance-measuring camera.

3. A position sensor (10) according to claim 1 or 2,
**characterized in that**
the evaluation unit (40) is configured to generate an object detection signal for a respective object (14, 14.1, 14.2), with a position signal determined for this object (14, 14.1, 14.2) and an identification code encoded in the associated RFID response signal being contained in the object detection signal.

4. A position sensor (10) according to any one of the preceding claims,
**characterized in that**
the evaluation unit (40) is configured to determine the phase shift between the RFID transmission signals and the RFID response signals by a demodulation method, in particular an I&Q demodulation method.

5. A position sensor (10) according to any one of the preceding claims,
**characterized in that**
the determination of position signals, the determination of phase shifts of RFID response signals and the determination of the division remainder take place cyclically, with the evaluation unit (40) being configured to assign the correspondingly varying RFID response signal to a position signal which does not vary during a predefined number of cycles, or only varies within a predefined position range, only if the respective difference amount during the predefined number of cycles is minimal.


**Revendications**

1. Capteur de position (10) pour la détection à résolution spatiale d'objets (14, 14.1, 14.2) dans une zone à surveiller (12),

comprenant un dispositif de mesure (30) pour déterminer les signaux de position respectifs des objets détectés (14, 14.1, 14.2) situés dans la zone à surveiller (12),
comprenant un lecteur RFID (20) disposé au voisinage du dispositif de mesure (30), qui est configuré pour émettre des instructions de commande RFID dans la zone à surveiller (12) en générant des signaux d'émission RFID modulés et pour recevoir des signaux de réponse RFID générés par un transpondeur RFID (24, 24.1, 24.2), disposé sur un objet (14, 14.1, 14.2), en réponse aux instructions de commande RFID reçues, et pour déterminer un déphasage entre les signaux d'émission RFID et les signaux de réponse RFID,
et comprenant une unité d'évaluation (40) qui est connectée au dispositif de mesure (30) et au lecteur RFID (20) et qui est configurée pour attribuer au moins un signal de réponse RFID respectif, correspondant dans le temps, à un signal de position respectif déterminé par le dispositif de mesure (30), en tenant compte du déphasage déterminé dudit signal de réponse RFID, **caractérisé en ce que**
l'unité d'évaluation (40) est configurée pour, au moyen d'un procédé d'optimisation, à partir d'une valeur de distance qui correspond à une composante de distance du signal de position déterminée par le dispositif de mesure (30), déterminer un reste de division associé pour des divisions respectives de la valeur de distance par différents multiples entiers de la longueur d'onde, en tenant compte de la longueur d'onde et du déphasage respectif d'un ou plusieurs signaux de réponse RFID, et pour attribuer un signal de réponse RFID respectif audit signal de position si, pour l'une des divisions respectives, la différence entre le déphasage dudit signal de réponse RFID et le reste de ladite division est minimale.

2. Capteur de position (10) selon la revendication 1,
**caractérisé en ce que**
le dispositif de mesure (30) comprend un dispositif radar (30), un dispositif lidar et/ou une caméra de mesure de distance.

3. Capteur de position (10) selon la revendication 1 ou 2,
**caractérisé en ce que**
l'unité d'évaluation (40) est configurée pour générer un signal de détection d'objet pour un objet respectif (14, 14.1, 14.2), le signal de détection d'objet contenant un signal de position déterminé pour ledit objet (14, 14.1, 14.2) et un code d'identification qui est codé dans le signal de réponse RFID associé.

4. Capteur de position (10) selon l'une des revendications précédentes, **caractérisé en ce que**
l'unité d'évaluation (40) est configurée pour déterminer le déphasage entre les signaux d'émission RFID et les signaux de réponse RFID par un procédé de démodulation, en particulier par un procédé de démodulation en phase et en quadrature.

5. Capteur de position (10) selon l'une des revendications précédentes, **caractérisé en ce que**
la détermination des signaux de position, la détermination des déphasages des signaux de réponse RFID et la détermination du reste de division sont effectuées de manière cyclique, l'unité d'évaluation

9

(40) étant configurée pour attribuer à un signal de position qui ne varie pas ou varie seulement dans une plage de position prédéterminée pendant un nombre prédéterminé de cycles, le signal de réponse RFID qui varie de manière correspondante, uniquement si la différence respective est minimale pendant le nombre prédéterminé de cycles.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2020053650 A1
- DE 102020206882 A1
- EP 2927838 A1

**In der Beschreibung aufgeführte Nicht-Patentliteratur**

- **MIESEN, R** ; **KIRSCH, F** ; **VOSSIEK, M.** Holographie Localization of Passive UHF RFID Transponders. *International Conference on RFID*, 2011, ISBN 978-1-4244-9606-8, 32-37
- 360° carrier phase measurement for UHF RFID local positioning. **R. MIESEN,** ; **A. PARR,** ; **J. SCHLEU** ; **M. VOSSIEK**. 2013 IEEE International Conference on RFID-Technologies and Applications (RFID-TA). Johor Bahru, 2013, 1-6